# EUROPÄISCHE PATENTSCHRIFT

(11) **EP 0 728 917 B1**
(45) Veröffentlichungstag und Bekanntmachung des Hinweises auf die Patenterteilung: **10.06.1998**
(21) Anmeldenummer: 96250028.6
(22) Anmeldetag: 01.02.1996
(51) Int. Cl.: F01L 3/02, C22C 19/05

(54) **Auslassventil für eine Dieselbrennkraftmaschine**
Exhaust valve for diesel engine
Soupape d'échappement pour moteur diesel

(30) Priorität: 27.02.1995 DE 19508069
(43) Veröffentlichungstag der Anmeldung: 28.08.1996
(73) Patentinhaber: NU-TECH GmbH, D-24536 Neumünster (DE)
(72) Erfinder: Fischer, Alfons, Dr., D-24113 Molfsee (DE)
(74) Vertreter: UEXKÜLL & STOLBERG

(56) Entgegenhaltungen:
- EP-A- 0 521 821
- WO-A-92/13179
- GB-A- 2 170 221

## Beschreibung

Die Erfindung betrifft ein Auslaßventil für eine Diesel-Hubkolbenbrennkraft-Maschine mit einem Grundkörper aus einer warmfesten Nickelbasislegierung, dessen Sitzfläche mit einer Beschichtung versehen ist, sowie ein Verfahren zu dessen Herstellung.

Aus der gattungsgemäßen EP 0 521 821 A2 ist ein Auslaßventil mit einem Grundkörper aus einer warmfesten Nickelbasislegierung des Typs "Nimonic" und mit einer mit dem Grundkörper durch Auftragsschweißen oder Plasmaspritzen verbundenen Sitzpartie aus einer Nickelbasislegierung bekannt. Die Nickelbasislegierung der Sitzpartie ist vorzugsweise vom Typ "Inconel". Trotz ihrer an sich nachgewiesenen guten Beständigkeit gegen eine korrosive Beanspruchung bei hohen Temperaturen treten im Einsatz Korrosionsschäden an den Sitzflächen dieser Ventile auf. Diese äußern sich in der Bildung tiefer Gräben, die zu sogenannten "Durchbläsern" an Verbrennungsgas führen. Aufgrund der damit verbundenen lokalen Temperaturerhöhung wird die Korrosion beschleunigt. Ursache für diese Korrosion ist das Zusammenwirken der Bestandteile des Dieselbrennstoffs und der umgebenden Luft. Der Korrosionsvorgang wird durch die Anwesenheit hoher Gehalte an Schwefel, Vanadium und Natrium besonders verstärkt.

Es ist Aufgabe der vorliegenden Erfindung, ein Auslaßventil mit verbesserter Korrosionsbeständigkeit im Bereich der Sitzfläche zu schaffen, wobei gleichzeitig eine ausreichende mechanische (Warmfestigkeit) und tribologische (Verschleißwiderstand) Stabilität gewährleistet werden soll, sowie Verfahren zur Herstellung eines Auslaßventils anzugeben.

Zur Lösung dieser Aufgabe dienen das Auslaßventil mit den Merkmalen des Patentanspruchs 1 und die Verfahren nach den Ansprüchen 5 und 6. Vorteilhafte Ausführungsformen der Erfindung sind in den Unteransprüchen aufgeführt.

Gemäß der vorliegenden Erfindung ist der aus einer Nickelbasislegierung bestehende Grundkörper des Auslaßventils im Bereich der Sitzfläche mit einer Beschichtung aus einer hartphasenhaltigen Nickelbasislegierung versehen, die mindestens 5 Vol.% Hartphasen enthält. Die Hartphasen haben Größen zwischen 10 µm und 100 µm und sind in eine metallische Matrix mit einem Cr-Gehalt von mindestens 20 Gew.% eingebettet. Eine derartige Gefügestruktur ist erhältlich durch Aufbringen der Beschichtung mit einem Plasma-, Lichtbogen-, Elektronenstrahl- oder Laserstrahl-Auftragschweißverfahren oder durch Metallspritzen mit anschließendem Umschmelzen mit einem plasma-, lichtbogen-, elektronenstrahl- oder laserstrahlgestützten Verfahren. Die genannten Aufbringungsverfahren sorgen für eine dichte, gleichmäßige Ausscheidung von Hartphasen im Gefüge, da eine relativ rasche, natürliche Abkühlung der aufgebrachten Beschichtung erfolgt. Dies führt zu einer gleichmäßigen Verteilung von kristallinen Hartphasenbereichen in der Legierung.

Derartige Schichtverbunde können den komplexen Anforderungen, die an einen Ventilsitz in Dieselbrennkraftmaschinen gestellt werden, gerecht werden. Diese Anforderungen bestehen in einer ausreichenden mechanischen Festigkeit (Warmfestigkeit, Warmhärte, Zeitstandfestigkeit), die mit einer hohen Korrosionsbeständigkeit (hoher Anteil an Chrom (Cr)) gegen V, Na und S gekoppelt werden muß. Darüber hinaus ist infolge der Beladung des Verbrennungsgases mit festen Partikeln und den besonderen Erfordernissen, die sich aus der Kontaktsituation im geschlossenen Zustand des Ventils ergeben, ebenfalls eine ausreichende Verschleißbeständigkeit (Gefügestruktur, Warmhärte) gefordert. Es hat sich gezeigt, daß mit dem erfindungsgemäßen Schichtverbund die Korrosionsbeständigkeit und die Verschleißbeständigkeit gegenüber der warmfesten Nickelbasislegierung des Grundkörpers und gegenüber bekannten Beschichtungen deutlich verbessert ist. Mithin zeigen die erfindungsgemäßen Auslaßventile für Dieselbrennkraftmaschinen eine erhöhte Lebensdauer.

Die Nickelbasislegierung des Grundkörpers kann zur Gruppe der warmfesten Nickelbasislegierungen oder auch zur Gruppe der Nickelsuperlegierungen gehören. Typische Vertreter dieser Gruppe sind Legierungen wie z.B. NiCr20 AlTi (Werkstoffnummer 2.4631).

Die hartphasenhaltige Nickelbasislegierung der Beschichtung kann beispielsweise folgende Zusammensetzung aufweisen:
C 0,5-8,6 Gew.%
B 0-4 Gew.%
Cr 20-75 Gew.%
Co 0-20 Gew.%
Nb 0-12 Gew.%
Ti 0-3 Gew.%
Al 0-5 Gew.%
Fe ≤ 3,0 Gew.%
Si 0-2 Gew.%
Mo 0-20 Gew.%
W 0-1,5 Gew.%.
Rest Ni.

Die Bandbreiten im Kohlenstoff- und Bohrgehalt stehen dabei für die Volumenanteile an den Hartphasen (Karbide, Boride), über die die Verschleißbeständigkeit der Legierung eingestellt wird. Wichtig ist ferner eine rißfreie Auftragung der Beschichtung, da ansonsten Risse den Korrosionsvorgang beschleunigen können, was die Lebensdauer deutlich verkürzt. Dies würde an sich einen geringeren Gehalt an hartphasenbildenden Elementen wie C, B und Cr erfordern. Andererseits ist eine dichte, gleichmäßige Ausscheidung von Hartphasen im Gefüge der Legierung zu gewährleisten, damit eine hohe Verschleißbeständigkeit sichergestellt ist, was hohe Gehalte an C, B und Cr erfordert.

Die Erfindung wird im folgenden anhand von Beispielen in den Zeichnungen erläutert, in denen:
- Figur 1: eine schematische, teilweise geschnittene Darstellung eines Auslaßventils zeigt; und
- Figur 2: die Gefügestruktur einer hartphasenhaltigen Beschichtung zeigt.

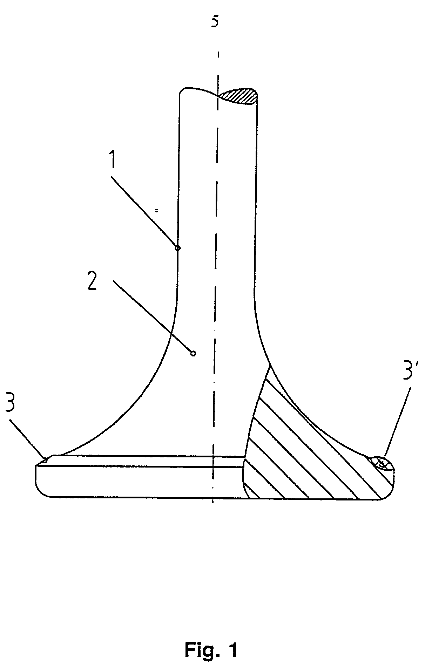

Figur 1 zeigt eine schematische Darstellung eines Auslaßventils, das allgemein mit 1 bezeichnet ist. Das Auslaßventil 1 weist einen Grundkörper 2 auf, der aus einer Nickelbasislegierung besteht. Im Bereich der Sitzfläche 3 ist eine Beschichtung 3' aufgebracht und fest mit dem Grundkörper 2 verbunden.

Das Auslaßventil 1, das die typische Form eines Tellerventils einer Viertakt-Dieselbrennkraftmaschine hat, besteht aus einem Grundkörper 2, auf den im Bereich des Ventilsitzes eine mit diesem fest verbundene Schicht 3' aufgebracht ist. Der Grundkörper besteht aus einer warmfesten Nickelbasislegierung, die durch Schmieden oder pulvermetallurgisch bearbeitet ist und abgesehen von üblichen Verunreinigungen neben Nickel folgende ZusammenSetzung aufweist:
C ≤ 0,1 Gew.%
Cr 18-20 Gew.%
Co 0-20 Gew.%
Ti 0-3 Gew.%
Al 0-5 Gew.%
Fe ≤ 3,0 Gew.%
Si 0-2 Gew.%
Mo 0-6 Gew.%
W 0-1,5 Gew.%.

Die Dicke der Beschichtung liegt typischerweise zwischen 0,3 und 5 mm. Nach dem Auftragschweißen wird das Ventil einer Glühbehandlung zwischen 650 und 850°C unterzogen. Nach dem Glühen folgt die Fertigbearbeitung der Sitzflächen durch Schleifen.

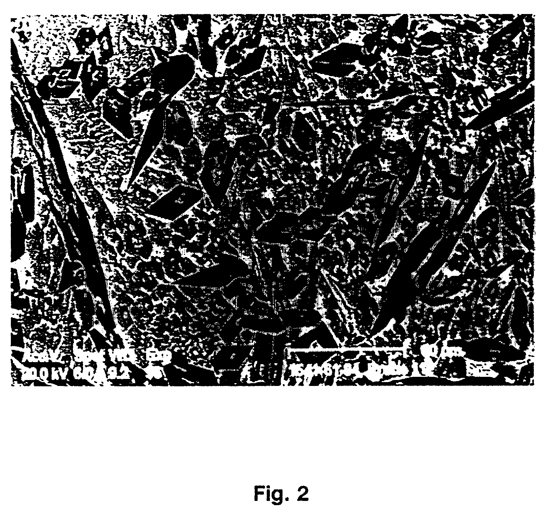

Figur 2 zeigt das Gefüge einer hartphasenhaltigen Beschichtung 3' gemäß der Erfindung. Die dargestellte Beschichtung weist 72 Gew.% Chrom, 8,6 Gew.% Kohlenstoff, 1 Gew.% Silizium, Rest Nickel auf. Die Beschichtung enthält 95 Vol.% Hartphasen, die in der Darstellung der grauen Phase entsprechen und Karbide vom Typ Cr₇C₃ sind. Die Karbide sind in eine metallische Matrix (weiße Phase; 20% Cr; 1% Si, Rest Ni) eingebettet. Die Beschichtung in dem dargestellten Beispiel wurde durch Laserauftragschweißen erhalten. Durch die rasche, natürliche Abkühlung, wie sie bei den in den Ansprüchen 5 und 6 genannten Aufbringungsverfahren gegeben ist, stellt sich eine gleichmäßige Verteilung von Hartphasen (Cr-Karbiden) in einem NiCrSi-Mischkristall ein. Die Härte der in Figur 1 gezeigten Cr-Karbide schwankt dabei zwischen 1200 und 1800 HV0,05. Durch die Einlagerung dieser Hartphasen läßt sich über die chemische Zusammensetzung der Beschichtung der Gehalt an Hartphase und damit die Härte der Beschichtung an jeden Einsatzfall anpassen. Die Hartphasengehalte lassen sich bei der Zusammensetzung der Beschichtung nach Anspruch 3 in den Grenzen zwischen 5 und 95 Vol.% variieren, so daß Härtewerte zwischen 250 und 1100 HV30 gezielt eingestellt werden können. Die Beschichtung in Figur 2 enthält 95 Vol.% Hartphasen, so daß für diese Legierung mit einer chemischen Zusammensetzung von 72% Chrom, 8,6% Kohlenstoff, 1% Silizium, Rest Nickel, eine Härte von 1100 HV30 erreicht wird.

Der hartphasenhaltige Schichtwerkstoff hat gegenüber dem hartphasenfreien Werkstoff eine erhöhte Verschleißbeständigkeit. Die Bandbreite der Chromgehalte steuert zusammen mit dem Kohlenstoffgehalt zum einen die Menge an Hartphasen und damit den Verschleißwiderstand und zum anderen zusammen mit Mo den Gehalt an den Elementen in der metallischen Grundmasse, die die hohe Korrosionsbeständigkeit einstellen. Sind mehr als 20% Chrom in der metallischen Grundmasse gelöst, so ist die Korrosionsbeständigkeit besser als die der warmfesten Nickelbasislegierung des Grundkörpers. Der Cr-Gehalt der Metallmatrix der in Figur 2 gezeigten Legierung schwankt zwischen 22 und 28 Gew.%.

In der Kombination der Eigenschaften Verschleißbeständigkeit und Korrosionsbeständigkeit sind die Beschichtungslegierungen überlegen, die aufgrund eines Cr-Gehaltes von 20 Gew.% lediglich die gleiche Korrosionsbeständigkeit wie die warmfeste Nickelbasislegierung des Grundkörpers aufweisen.

Besonders vorteilhaft hinsichtlich der Ausbildung der Gefügestruktur der Beschichtung 3' und damit der Erzielung bestmöglicher Eigenschaften ist das Auftragschweißen eines pulverförmigen Zusatzwerkstoffs mit einem strahlgestützten (Lichtbogen, Plasma-, Laser-, Elektronenstrahl-) Schmelzschweißverfahren. Die in Figur 2 dargestellte Gefügestruktur wurde durch Laserauftragsschweißen erhalten. Ferner sind zur Herstellung der Beschichtung 3 auch Metallspritzverfahren anwendbar, bei denen nicht der gesamte Zusatzwerkstoff bei der Auftragung aufgeschmolzen wird, wenn die aufgetragene Schicht über ein strahlgestütztes Schmelzverfahren (Lichtbogen, Plasma-, Laser-, Elektronenstrahl) nach dem Auftragen umgeschmolzen wird.

## Patentansprüche

1. Auslaßventil für eine Diesel-Hubkolbenbrennkraft-Maschine mit einem Grundkörper (2) aus einer warmfesten Nickelbasislegierung, dessen Sitzfläche (3) mit einer Beschichtung (3') aus einer Nickelbasislegierung fest verbunden ist, dadurch gekennzeichnet, daß die Beschichtung (3') hartphasenhaltig ist und mindestens 5 Vol.% Hartphasen, welche 10 µm bis 100 µm groß sind, in einer metallischen Matrix mit einem Gehalt an Cr von wenigstens 20 Gew.% aufweist.

2. Auslaßventil nach Anspruch 1, wobei die Nickelbasislegierung des Grundkörpers (2), abgesehen von üblichen Verunreinigungen, neben Nickel folgende Komponenten mit den jeweiligen Gehalten aufweist:
C ≤ 0,1 Gew.%
Cr 18-20 Gew.%
Co 0-20 Gew.%
Ti 0-3 Gew.%
Al 0-5 Gew.%
Fe ≤ 3,0 Gew.%
Si 0-2 Gew.%
Mo 0-6 Gew.%
W 0-1,5 Gew.%.

3. Auslaßventil nach Anspruch 1, wobei die Nickelbasislegierung der Beschichtung (3'), abgesehen von üblichen Verunreinigungen, neben Nickel folgende Komponenten mit den jeweiligen Gehalten aufweist:
C 0,5-8,6 Gew.%
B 0-4 Gew.%
Cr 20-75 Gew.%
Co 0-20 Gew.%
Nb 0-12 Gew.%
Ti 0-3 Gew.%
Al 0-5 Gew.%
Fe ≤ 3,0 Gew.%
Si 0-2 Gew.%
Mo 0-20 Gew.%
W 0-1,5 Gew.%.

4. Auslaßventil nach Anspruch 1, wobei die Dicke der Beschichtung (3') zwischen 0,3 mm und 5 mm liegt.

5. Verfahren zur Herstellung eines Auslaßventils nach einem der vorhergehenden Ansprüche, bei dem die Beschichtung (3') durch ein Plasma-, Lichtbogen-, Elektronenstrahl- oder Laserstrahl-Auftragschweißverfahren auf die Sitzfläche (3) aufgebracht wird.

6. Verfahren zur Herstellung eines Auslaßventils nach einem der Ansprüche 1 bis 4, bei dem die Beschichtung (3') durch Metallspritzen auf die Sitzfläche (3) aufgebracht und anschließend durch ein plasma-, lichtbogen-, elektronenstrahl- oder laserstrahlgestützten Verfahren umgeschmolzen wird.

## Claims

1. An exhaust valve for a diesel internal combustion engine comprising a body (2) consisting of a heat-resistant nickel-base alloy, wherein a coating (3') of a nickel-base alloy is firmly connected to the seat area of said body, characterized in that said coating contains hard phases and has at least 5 % by volume hard phases of 10 to 100 µm in size in a metallic matrix having an amount of Cr of at least 20 % by weight.

2. An exhaust valve as claimed in claim 1, wherein the nickel-base alloy of body (2) apart from usual impurities and nickel has the following components in the respective amounts of:
C ≤ 0,1 % by weight
Cr 18-20 % by weight
Co 0-20 % by weight
Ti 0-3 % by weight
Al 0-5 % by weight
Fe ≤ 3,0 % by weight
Si 0-2 % by weight
Mo 0-6 % by weight
W 0-1,5 % by weight.

3. An exhaust valve as claimed in claim 1, wherein the nickel base alloy of layer (3') apart from usual impurities and nickel has the following components in the respective amounts of:
C 0,5-8,6 % by weight
B 0-4 % by weight
Cr 20-75 % by weight
Co 0-20 % by weight
Nb 0-12 % by weight
Ti 0-3 % by weight
Al 0-5 % by weight
Fe ≤ 3,0 % by weight
Si 0-2 % by weight
Mo 0-20 % by weight
W 0-1,5 % by weight.

4. An exhaust valve as claimed in claim 1, wherein the thickness of said coating (3') is from 0,3 mm to 5 mm.

5. A method of manufacturing an exhaust valve as claimed in any of the preceding claims, wherein said coating (3') is deposited onto said seat area (3) by means of plasma, arc, electron beam or laser beam surface welding methods.

6. A method of manufacturing an exhaust valve as claimed in any one of claims 1 to 4, wherein said coating (3') is deposited onto said seat area (3) by means of metal-spraying followed by remelting by means of plasma, arc, electron beam or laser beam welding methods.

## Revendications

1. Soupape de sortie pour une machine thermique à piston pour diesel comprenant un corps de base (2) réalisé en un alliage à base de nickel résistant à la chaleur dont la surface (3) de siège est reliée solidement à un revêtement (3') réalisé en un alliage à base de nickel, caractérisée en ce que le revêtement (3') comprend des phases durcies et au moins 5% en volume de phases durcies possédant une taille comprise entre 10 µm et 100 µm dans une matrice métallique de teneur en Cr d'au moins 20% en poids.

2. Soupape de sortie selon la revendication 1, dans laquelle l'alliage à base de nickel du corps de base (2) présente, à l'exception des impuretés usuelles, en dehors du nickel, les composants suivants avec les teneurs respectives :
C ≤ 0,1% en poids
Cr 18-20% en poids
Co 0-20% en poids
Ti 0-3% en poids
Al 0-5% en poids
Fe ≤ 3,0% en poids
Si 0-2% en poids
Mo 0-6% en poids
W 0-1,5% en poids.

3. Soupape de sortie selon la revendication 1, dans laquelle l'alliage à base de nickel du revêtement (3') présente, à l'exception des impuretés usuelles, en dehors du nickel, les composants suivants avec les teneurs respectives :
C 0,5-8,6% en poids
B 0-4% en poids
Cr 20-75% en poids
Co 0-20% en poids
Nb 0-12% en poids
Ti 0-3% en poids
Al 0-5% en poids
Fe ≤ 3,0% en poids
Si 0-2% en poids
Mo 0-20% en poids
W 0-1,5% en poids.

4. Soupape de sortie selon la revendication 1, dans laquelle l'épaisseur du revêtement (3') est comprise entre 0,3mm et 5 mm.

5. Procédé pour la fabrication d'une soupape de sortie selon l'une quelconque des revendications précédentes dans lequel le revêtement (3') est appliqué sur la surface de siège (3) par des procédés de soudure à application par plasma, par arc de lumière, par faisceau d'électron ou par faisceau laser.

6. Procédé pour la fabrication d'une soupape selon l'une quelconque des revendications 1 à 4 dans lequel le revêtement (3') est appliqué par des injecteurs de métal sur la surface de siège (3) et est ensuite fondu par un procédé assisté par plasma, arc de lumière, faisceau d'électron ou faisceau laser.
